# EUROPÄISCHE PATENTSCHRIFT

(11) **EP 4 252 515 B1**
(45) Veröffentlichungstag und Bekanntmachung des Hinweises auf die Patenterteilung: **12.03.2025**
(21) Anmeldenummer: 23401009.8
(22) Anmeldetag: 16.03.2023
(51) Int. Cl.: A01C 15/00, B65D 43/02, B65D 45/20, B65D 50/06

(54) **LANDWIRTSCHAFTLICHE ARBEITSMASCHINE UND BEHÄLTER FÜR EINE LANDWIRTSCHAFTLICHE ARBEITSMASCHINE**
AGRICULTURAL MACHINE AND CONTAINER FOR AN AGRICULTURAL MACHINE
MACHINE DE TRAVAIL AGRICOLE ET RÉCIPIENT POUR MACHINE DE TRAVAIL AGRICOLE

(30) Priorität: 30.03.2022 DE 102022107470
(43) Veröffentlichungstag der Anmeldung: 04.10.2023
(73) Patentinhaber: Amazonen-Werke H. Dreyer SE & Co. KG, 49205 Hasbergen (DE)
(72) Erfinder: Schmidt, Steffen, 27798 Hude (DE)

(56) Entgegenhaltungen:
- EP-A2- 1 101 394
- WO-A1-2018/231826
- DE-A1- 102018 127 013

## Beschreibung

Die Erfindung betrifft einen Behälter für eine landwirtschaftliche Arbeitsmaschine gemäß dem Oberbegriff des Patentanspruches 1 und eine landwirtschaftliche Arbeitsmaschine gemäß dem Oberbegriff des Patentanspruches 8.

Ein derartiger Behälter ist in der Druckschrift US 5 881 904 A und/oder DE 10 2018 127 013 A1 beschrieben. Der Behälter ist zum Vorhalten von landwirtschaftlichem Verteilgut, wie beispielsweise Saatgut und/oder Dünger, an landwirtschaftlichen Arbeitsmaschinen, hier nach Art von Sämaschinen, vorgesehen und umfasst wenigstens ein am Behälter angeordnetes oder anbringbares Abdeckmittel, insbesondere einen Deckel. Das Abdeckmittel, insbesondere der Deckel, ist mittels zumindest eines, insbesondere nach Art einer Schnappverbindung ausgebildeten, Schnellverschlusses selbsthaltend verschließbar ausgeführt und insbesondere dazu eingerichtet, eine Öffnung bzw. Einfüllöffnung des Behälters zu öffnen (freizugeben) und/oder zu verschließen.

Gattungsgemäße Behälter sind auf dem Gebiet der Landwirtschaft auch für Arbeitsmaschinen bekannt, welche nach Art von Feldspritzen ausgebildet sind. Derartige Behälter können dabei dazu geeignet und/oder vorgesehen sein, flüssiges Verteilgut, wie beispielsweise Pflanzenschutzmittel, Unkrautbekämpfungsmittel oder dergl. vorzuhalten.

In der landwirtschaftlichen Praxis hat sich gezeigt, dass die Selbsthaltung derartiger an den Behältern, insbesondere den Abdeckmitteln, ausgebildeter Schnellverschlüsse in einigen Betriebssituationen bisher noch nicht zufriedenstellend ist. Insbesondere wenn das Abdeckmittel bzw. der Deckel mit dem Behälter in eine zumindest in etwa seitlich oder zum Boden hin weisende Richtung gekippt ist, kann dies es zu einem ungewollten Öffnen des Behälters führen, wodurch beispielsweise vorgehaltenes Verteilgut unabsichtlich aus dem Behälter austreten kann. An landwirtschaftlichen Arbeitsmaschinen treten solche Fehlfunktionen an derartigen Behältern während sogenannter Transport- und/oder Vorgewendestellungen verhältnismäßig häufig auf.

Die der Erfindung zugrunde liegende Aufgabe besteht somit darin, die Betriebssicherheit derartiger Behälter weiter zu verbessern. Insbesondere besteht die Aufgabe darin, den Behälter so zu gestalten, dass das Abdeckmittel, insbesondere der Deckel, für einen Anwender besonders einfach bedienbar, insbesondere verschließbar, ist.

Diese Aufgabe wird erfindungsgemäß gelöst durch wenigstens einen Verriegelungsmechanismus, welcher zumindest teilweise dreh- und/oder verschiebbar zwischen dem Schnellverschluss und dem Abdeckmittel, insbesondere Deckel, angeordnet ist, und welcher zum Verriegeln des Abdeckmittels, insbesondere Deckels, in verklemmbarer und/oder blockierender Weise zwischen dem Schnellverschluss und dem Abdeckmittel, insbesondere Deckel, positionierbar ist.

In Folge dieser Maßnahme ist ein Behälter für eine landwirtschaftliche Arbeitsmaschine geschaffen, bei welchem der Schnellverschluss und das Abdeckmittel, insbesondere bedarfsweise und/oder während einer Schließstellung, durch den Verriegelungsmechanismus in zueinander zumindest nahezu unbeweglicher Weise blockiert und/oder gesperrt sind. Der Verriegelungsmechanismus ist hierbei vorzugsweise händisch vom Bediener verstellbar. Der Schnellverschluss ist vorzugsweise derart ausgeführt, dass der Behälter, insbesondere eine Öffnung des Behälters, im Normalbetrieb, wie beispielsweise während der Ausbringung von Verteilgut, durch die Selbsthaltung des Schnellverschlusses verschlossen ist. In Situationen in denen der Behälter geneigt oder gekippt ist, ist der Behälter, insbesondere das Abdeckmittel, alternativ oder zusätzlich anhand des Verriegelungsmechanismus verschlossen. Mit anderen Worten wird das Abdeckmittel, während der Behälter gekippt oder geneigt ist, alternativ oder zusätzlich durch den Verriegelungsmechanismus in Schließstellung gehalten. Des Weiteren kann zusätzlich vorgesehen sein, dass das Abdeckmittel auch während des Normalbetriebs, beispielsweise bei nicht gekippten Behälter, durch den Verriegelungsmechanismus verschlossen ist. Der Verriegelungsmechanismus ist vorzugsweise dazu eingerichtet, den Schnellverschluss je nach Bedarf freizugeben und/oder zu sperren bzw. zu blockieren. Durch eine derartige Ausführungsform ist ein Behälter geschaffen, welcher mittels einem zum Schnellverschluss zusätzlichen Verriegelungsmechanismus besonders betriebssicher verschlossen ist.

Im Folgenden ist unter dem Begriff "Abdeckmittel", sofern nicht anders explizit angegeben, vorzugsweise einen Deckel bzw. Behälterdeckel zu verstehen, mittels dem eine Öffnung des Behälters, beispielsweise zur Überprüfung eines Füllstands, zum Einfüllen oder Vermischen des Verteilguts, zu Wartungszwecken, usw., bedarfsweise von einem Bediener geöffnet und/oder verschlossen werden kann.

Weiterhin ist im Folgenden unter dem Begriff "Schnellverschluss" eine form- und/oder kraftschlüssige Verbindung zwischen Abdeckmittel und Behälter, insbesondere einer Seitenwand des Behälters, zu verstehen. Der Schnellverschluss ist derartig ausgeführt, dass er für einen Anwender bzw. Bediener zerstörungsfrei und/oder reversibel lösbar ist. Der Schnellverschluss ist besonders bevorzugt nach Art einer oder mehrere Schnappverbindungen ausgebildet.

In einer bevorzugten Ausführungsform des erfindungsgemäßen Behälters ist der Verriegelungsmechanismus dreh- und/oder verschiebbar, insbesondere schwenkbar, am Schnellverschluss angeordnet. Der Verriegelungsmechanismus ist dabei bevorzugt beweglich am Schnellverschluss angeordnet und/oder unmittelbar beweglich mit dem Schnellverschluss verbunden. Ferner bevorzugt ist der Verriegelungsmechanismus zwischen einer den Schnellverschluss freigebenden Öffnungsstellung und einer den Schnellverschluss sperrenden bzw. blockierenden Schließstellung verstellbar. Bei einer derartigen Ausführungsform ist der Verriegelungsmechanismus besonders nah und/oder direkt auf dem Schnellverschluss angeordnet, sodass der Verriegelungsmechanismus und der Schnellverschluss für einen Bediener besonders einfach bedienbar sind. Der Verriegelungsmechanismus und der Schnellverschluss sind bevorzugt derart ausgebildet und/oder angeordnet, dass sie vom Bediener einhändig und/oder werkzeuglos bedienbar sind.

In einer alternativen jedoch ebenfalls bevorzugten Ausführungsform kann der Verriegelungsmechanismus alternativ oder zusätzlich, vorzugsweise beweglich, am Abdeckmittel und/oder an einer Seitenwand des Behälters angeordnet sein.

In einer Weiterbildung des erfindungsgemäßen Behälters ist der Schnellverschluss verstellbar, insbesondere schwenkbar, am Behälter, vorzugsweise am Abdeckmittel, angeordnet. Besonders bevorzugt ist der Schnellverschluss dabei zumindest teilweise nach Art eines Handgriffs ausgebildet. Der Schnellverschluss umfasst vorzugsweise wenigstens einen Schnapphaken, welcher zum Verschließen des Abdeckmittels dazu eingerichtet ist, wenigstens ein zugeordnetes Halteelement und/oder einen Vorsprung, insbesondere form- und/oder kraftschlüssig, zu hintergreifen. Weiterhin kann vorgesehen sein, dass der Schnellverschluss teilweise am Behälter, insbesondere einer Seitenwand des Behälters, und teilweise am Abdeckmittel angeordnet ist. Ferner kann dabei beispielsweise der wenigstens eine Schnapphaken am Abdeckmittel und das wenigstens eine Halteelement bzw. der Vorsprung am Behälter, insbesondere einer Seitenwand des Behälters, oder umgekehrt angeordnet sein. Der wenigstens eine Schnapphaken ist dabei vorzugsweise schwenkbar und/oder beweglich angeordnet, wobei alternativ auch denkbar wäre, dass das Halteelement und/oder der Vorsprung beweglich angeordnet und/oder ausgebildet sind. Besonders bevorzugt ist ein Schnellverschluss, welcher zumindest teilweise nach Art eines vom Bediener händisch greifbaren Handgriffs ausgebildet ist, wobei vorzugsweise mehrere gemeinsam verschwenkbare Schnapphaken vorgesehen sind, welche am Handgriff angeordnet sind.

In einer alternativen Ausführungsform wäre auch denkbar, dass der Schnellverschluss, insbesondere der Schnapphaken, zumindest teilweise unbeweglich jedoch besonders nachgiebig und/oder flexibel bzw. elastisch verformbar ausgebildet ist.

In einer anderen bevorzugten Ausführungsform des erfindungsgemäßen Behälters ist der Schnellverschluss in oder während einer Schließstellung des Verriegelungsmechanismus zumindest nahezu unbeweglich fixiert und/oder blockiert. Während sich der Verriegelungsmechanismus in der Schließstellung befindet, ist der Schnellverschluss in unlösbarer Weise und/oder zumindest nahezu starr mit dem Abdeckmittel und/oder dem Behälter bzw. einer Seitenwand des Behälters verbunden. Unter einem unbeweglich fixierten und/oder blockierten Schnellverschluss kann alternativ oder zusätzlich auch ein zumindest geringfügig beweglicher Schnellverschluss verstanden werden, bei welchem die Selbsthaltung zumindest weitestgehend erhalten und/oder das Abdeckmittel verschlossen bleibt. Darüber hinaus ist für den Verriegelungsmechanismus eine Öffnungsstellung vorgesehen, bei welcher der Schnellverschluss zum Entriegeln und/oder Lösen des Abdeckmittels vom Behälter oder der Seitenwand des Behälters freigegeben ist. Insbesondere ist dabei vorgesehen, dass das Abdeckmittel während der Öffnungsstellung des Verriegelungsmechanismus zumindest nahezu ausschließlich durch die Selbsthaltung des Schnellverschlusses und/oder das Eigengewicht des Abdeckmittels geschlossen ist. Diese Ausführungsform erlaubt es den Behälter in bedarfsgerechter Weise zu verschließen und/oder zu verriegeln. Beispielsweise kann vorgesehen sein, dass der Verriegelungsmechanismus während des Normalbetriebs und/oder eines Ausbringvorgangs in Öffnungsstellung positioniert ist und somit nicht verwendet wird, so dass das Abdeckmittel durch Lösen oder Schließen des Schnellverschlusses besonders schnell und einfach bedienbar ist. Erst wenn vorgesehen ist, den Behälter zu kippen, beispielsweise für einen Transport, kann der Verriegelungsmechanismus in die Schließstellung positioniert werden, so dass das Abdeckmittel und damit der Behälter mit besonders großer Betriebssicherheit verschlossen ist. Die Art und Weise wie der Behälter verschlossen ist, ist somit situationsgerecht anpassbar.

In einer weiteren anderen bevorzugten Ausführungsform des erfindungsgemäßen Behälters weist der Schnellverschluss, insbesondere zum Öffnen und/oder Verschließen des Abdeckmittels, einen definierten Verstellbereich auf, welcher mittels des Verriegelungsmechanismus begrenzbar ist. Der Schnellverschluss ist vorzugsweise derart ausgebildet, dass er anhand einer Verstellung in definierter Richtung und/oder einem Überwinden eines bestimmten Verstellbereiches gelöst und/oder verschlossen werden kann. Bevorzugt ist der Verriegelungsmechanismus hierbei dazu eingerichtet, den zum Lösen und/oder Verschließen notwendigen Verstellbereich des Schnellverschlusses zu begrenzen und/oder zumindest nahezu vollständig zu sperren. Der Verstellbereich kann alternativ oder zusätzlich auch als Schwenkbereich des Schnellverschlusses bezeichnet werden. Besonders bevorzugt ist der der Verstellbereich derart ausgebildet, dass der Schnellverschluss bis zumindest in etwa 90°, insbesondere bis zu 30° oder 45° verschwenkbar ist.

In einer anderen Weiterbildung des erfindungsgemäßen Behälters ist der Verriegelungsmechanismus zum Verriegeln des Abdeckmittels und/oder des Schnellverschlusses unmittelbar unterhalb und/oder gegen eine Kontur des Abdeckmittels, vorzugsweise gegen und/oder an einen Außenrand des Abdeckmittels, positionierbar. Insbesondere ist hierbei vorgesehen, dass wenigstens ein Ende des Verriegelungsmechanismus für die Schließstellung gegen das Abdeckmittel andrückbar und/oder vorspannbar ist. Mit anderen Worten ist dabei vorzugsweise vorgesehen, dass der Verriegelungsmechanismus in Schließstellung zwischen dem Schnellverschluss und dem Abdeckmittel arretiert ist.

In einer weiteren anderen Weiterbildung des erfindungsgemäßen Behälters ist der Verriegelungsmechanismus, insbesondere ein dem Verriegelungsmechanismus zugeordneter Stellhebel, in vorgespannter Weise in wenigstens einer von mehreren Stellungen, insbesondere in einer Schließ- und/oder Öffnungsstellung des Verriegelungsmechanismus, fixierbar und/oder arretierbar. Dem Verriegelungsmechanismus ist hierbei vorzugsweise wenigstens ein Federelement zugeordnet, welches dazu eingerichtet ist, den Verriegelungsmechanismus, insbesondere den Stellhebel, in wenigstens einer Stellung vorzuspannen und/oder zu halten. Beispielsweise kann vorgesehen sein, dass der Verriegelungsmechanismus, insbesondere der Stellhebel, mittels des Federelements in abgesenkter Öffnungsstellung und/oder aufgerichteter bzw. verriegelter Schließstellung fixiert und gegen ein unabsichtliches Betätigen, insbesondere Entriegeln und/oder Verriegeln, des Verriegelungsmechanismus gesichert ist. Durch diese Ausführungsform ist die Betriebssicherheit des Behälters in einfacher Weise noch weiter gesteigert.

Die der Erfindung zugrundeliegende Aufgabe wird ferner durch eine landwirtschaftliche Arbeitsmaschine, insbesondere Sämaschine, nach der eingangs genannten Art gelöst, wobei die Arbeitsmaschine wenigstens einen zum Vorhalten des Verteilguts vorgesehenen Behälter umfasst, welcher nach zumindest einer der vorstehend beschriebenen Ausführungsformen ausgebildet ist. Hinsichtlich der Vorteile und Modifikationen der erfindungsgemäßen landwirtschaftlichen Arbeitsmaschine wird daher zunächst auf die Vorteile und Modifikationen des erfindungsgemäßen Behälters verwiesen.

In einer besonders bevorzugten Ausführungsform umfasst die Arbeitsmaschine mehrere nach Art von Reiheneinheiten ausgebildete Säaggregate zum Ablegen des Verteilguts, welche jeweils wenigstens einen Behälter zum Vorhalten des Verteilguts umfassen. Die Behälter sind dabei vorzugsweise nach zumindest einer der vorstehend beschriebenen Ausführungsformen ausgebildet.

Weitere Einzelheiten der Erfindung sind der Beispielsbeschreibung und den Zeichnungen zu entnehmen. Die Zeichnungen zeigen
- Fig.1: eine hinter einem Ackerschlepper angehangene als Einzelkornsämaschine ausgeführte landwirtschaftliche Arbeitsmaschine mit einer Mehrzahl erfindungsgemäßer Behälter in perspektivischer Ansicht,
- Fig.2A: eine Detailansicht eines erfindungsgemäßen Behälters mit einem geöffneten Abdeckmittel in perspektivischer Ansicht,
- Fig.2B: der Behälter aus Fig.2A mit geschlossenem Abdeckmittel,
- Fig.3A: eine Detailansicht eines Verriegelungsmechanismus des Behälters in einer entriegelten Öffnungsstellung in Schnittdarstellung von hinten;
- Fig.3B: der Verriegelungsmechanismus aus Fig.3A in einer verriegelten Schließstellung; und
- Fig.4: der Verriegelungsmechanismus in Schließstellung und in perspektivischer Ansicht.

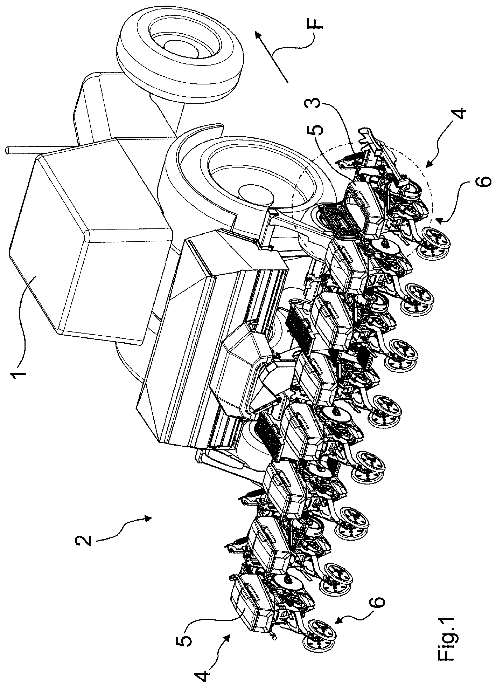

Eine hinter einem Ackerschlepper 1 angehangene und als Einzelkornsämaschine 2 ausgeführte landwirtschaftliche Arbeitsmaschine ist in Fig.1 zu sehen. Die Einzelkornsämaschine 2 weist eine Mehrzahl von quer zur Fahrtrichtung F an einem Balken 3 angeordnete Säaggregate 4 auf, welche jeweils nach Art an sich bekannter landwirtschaftlicher Reiheneinheiten ausgebildet sind. Die Säaggregate 4 weisen an ihrer Oberseite jeweils einen Behälter 5 zum Vorhalten von Verteilgut, hier Saatgut, auf. Von dem Behälter 5 gelangt das als Saatgut ausgeführte Verteilgut in ein nicht näher gezeigtes Vereinzelungsorgan, von welchem es bedarfsgerecht und/oder in regelmäßigen Abständen an Bodenbearbeitungswerkzeuge 6 abgegeben wird. Die Bodenbearbeitungswerkzeuge 6 dienen dazu im Boden eine Säfurche zu öffnen, in welche vereinzelte Saatkörner des auszubringenden Verteilguts abgelegt werden, und diese Säfurche anschließend wieder mit Boden zu bedecken.

Alternativ zum gezeigten Ausführungsbeispiel wären auch andere Sämaschinen, wie beispielsweise mechanische Sämaschinen oder pneumatische Großflächensämaschinen denkbar. Darüber hinaus wäre auch eine landwirtschaftliche Arbeitsmaschine 2 denkbar, welche zum Ausbringen von flüssigem Verteilgut, beispielsweise Pflanzenschutzmittel oder dergl., vorgesehen ist, z.B. nach Art einer landwirtschaftlichen Feldspritze. Hierbei könnte der Behälter 5 dazu geeignet sein, dass flüssige Verteilgut, welches häufig auch als Spritzmittel bezeichnet wird, vorzuhalten und/oder zu bevorraten.

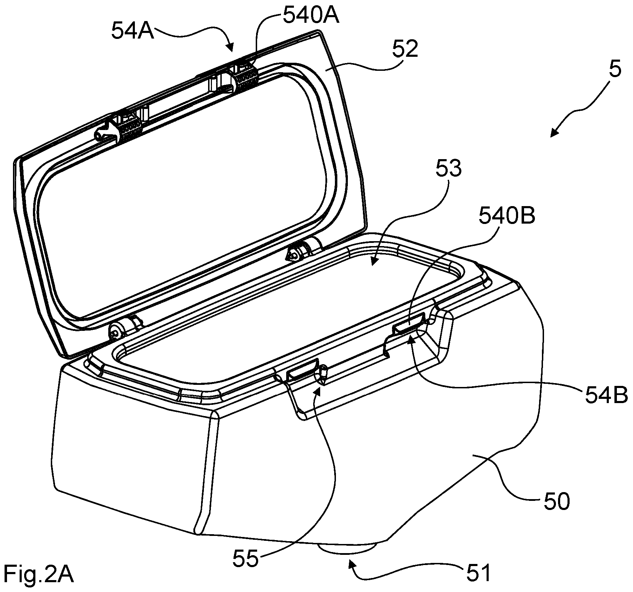

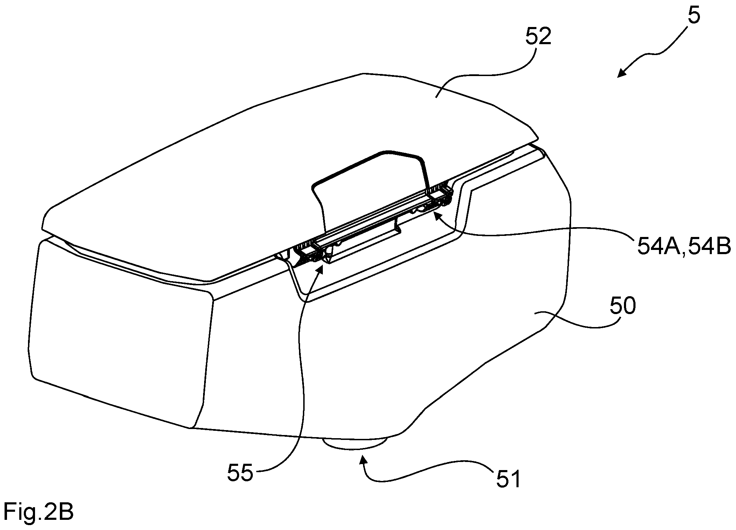

In der Fig.2A und 2B ist der Behälter 5, welcher hier jeweils an einem Säaggregat 4 angeordnet ist, in vergrößerter Einzelansicht gezeigt. Der Behälter 5 weist dabei einen Vorratstank 50 zum Bevorraten des Verteilguts und einen an der Unterseite des Vorratstanks 50 ausgebildeten Auslauf 51 auf, über den das Verteilgut an das darunter angeordnete Vereinzelungsorgan übergeben wird. Der Behälter 5 umfasst ferner ein als verschließbaren Deckel ausgebildetes Abdeckmittel 52, welches in der Fig.2A in geöffneter Position bzw. Stellung und in der Fig.2B in geschlossener Position bzw. Stellung gezeigt ist. An der Oberseite des Behälters 5 ist eine, hier im Wesentlichen rechteckförmige, Öffnung 53 zu sehen. Die Öffnung 53 wird für die Zugänglichkeit des Behälterinneren verwendet. Beispielsweise kann die Öffnung 53 als Einfüllöffnung zum Ein- und/oder Nachfüllen des Verteilguts verwendet werden. Alternativ kann die Öffnung 53 auch zur Füllstandsüberprüfung und/oder zu Wartungszwecken verwendet werden.

Damit das Verteilgut und/oder ein pneumatischer Überdruck des Vereinzelungsorgans während des Betriebs sicher und/oder druckdicht innerhalb des Behälters 5 zurückgehalten werden kann, wird der Deckel 52 für und/oder während des Betriebs verschlossen. Der Deckel 52 ist hierfür in verschwenkbarer Weise mit dem Behälter 5, insbesondere dem Vorratstank 50, verbunden, wobei alternativ oder zusätzlich auch ein vollständig abnehmbarer Deckel 52 denkbar wäre. Um ein unbeabsichtigtes Öffnen des Behälters 5 zu vermeiden, ist ein selbsthaltender Schnellverschluss 54A, 54B vorgesehen, mittels dem der Deckel 52 in verschließbarer Weise mit dem Behälter 5, insbesondere einer Seitenwand 55 des Behälters 5 bzw. dem Vorratstank 50, verbindbar ist. Der hier dargestellte Schnellverschluss 54A, 54B ist nach Art einer Schnappverbindung ausgebildet und weist mehrere an dem Deckel 52 angeordnete bzw. mit dem Deckel 52 unmittelbar verbundene Schnapphaken 540A auf, welche in hintergreifender Weise, insbesondere form- und/oder kraftschlüssig, mit an dem Behälter 5 und/oder der Seitenwand 55 ausgebildeten Halteelementen und/oder Vorsprüngen 540B verbindbar sind. Alternativ hierzu wären auch andere Arten von Schnellverschlüssen denkbar. Der Schnellverschluss 54A, 54B kann alternativ zum gezeigten Ausführungsbeispiel auch nur einen Schnapphaken 540A und/oder einen Vorsprung 540B ausweisen. Wie in der Fig.2B besser zu erkennen ist, ist der Schnellverschluss 54A, 54B zumindest teilweise nach Art eines von einem Bediener händisch bzw. manuell bedienbaren Handgriffs ausgebildet. Somit kann der Bediener den Schnellverschluss 54A werkzeuglos greifen und den Deckel 52 in besonders einfacher Weise öffnen und/oder schließen.

In einigen Situationen, beispielsweise wenn der Behälter 5 teilweise oder kopfüber gekippt ist und/oder sich die Arbeitsmaschine 2 in Transportstellung befindet, ist der Behälter 5, insbesondere der Deckel 52 und/oder der Schnellverschluss 54A, 54B, besonders hohen Belastungen ausgesetzt. Ist der Behälter 5 dabei zumindest noch teilweise mit Verteilgut befüllt, kann das Verteilgut zusätzlich gegen die Unterseite des Deckels 52 drücken. Um dabei ein unbeabsichtigtes Öffnen des Deckels 52 und damit des Behälters 5 zu verhindern, ist an dem Behälter 5, insbesondere am Schnellverschluss 54A, 54B, ein Verriegelungsmechanismus 56 vorgesehen, dessen Funktionsweise nachfolgend näher beschrieben ist.

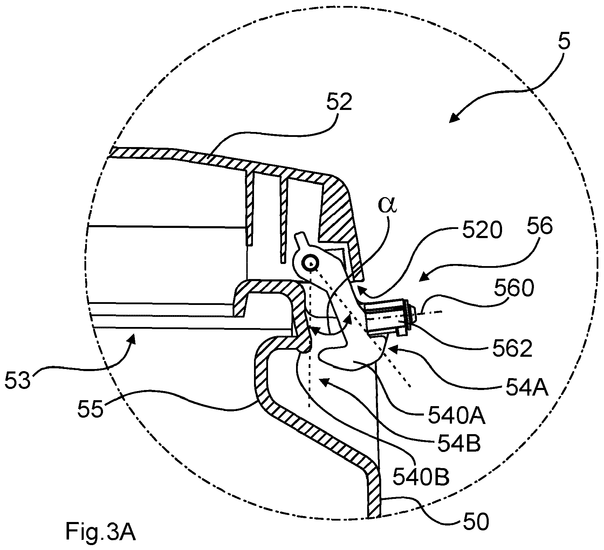

Die Fig.3A zeigt den Behälter 5 mit bereits geschlossenem Deckel 52, welcher jedoch nicht über den Schnellverschluss 54A, 54B verschlossen ist. Wie hierbei zu erkennen ist, ist ein Teil des Schnellverschlusses 54A schwenkbar am Deckel 52 angeordnet. Alternativ dazu könnten der schwenkbare Teil des Schnellverschlusses 54A, insbesondere der Schnapphaken 540A, am Vorratstank 50 bzw. der Seitenwand 55 und der nicht schwenkbare Teil des Schnellverschlusses 54B, insbesondere das Halteelement und/oder der Vorsprung 540B, am Deckel 52 angeordnet sein. Der Schnellverschluss 54A, 54B weist einen definierten Verstellbereich α bzw. einen Schwenkbereich auf, welcher zum Lösen und/oder Verbinden des Schnellverschlusses 54A, 54B und damit zum Öffnen und/oder Verschließen des Deckels 52 vorgesehen ist. Der Verriegelungsmechanismus 56 ist, insbesondere um die Drehachse 560, drehbar zwischen dem Schnellverschluss 54A, 54B und dem Deckel 52, hier direkt am Schnellverschluss 54A, angeordnet. Alternativ oder zusätzlich zur dargestellten Ausführungsform könnte der Verriegelungsmechanismus 56 auch verschiebbar oder klappbar sein.

Zum Lösen und/oder Schwenken des Schnellverschlusses 54A, 54B ist der Verriegelungsmechanismus 56 in einer abgesenkten Öffnungsstellung, wie ebenfalls in der Fig.3A gezeigt ist, zu positionieren und/oder zu verbringen. Aufgrund der Selbsthaltung des Schnellverschlusses 54A, 54B ist der Deckel 52 während des Normalbetriebs bzw. in einer abgesenkten Arbeitsstellung der Arbeitsmaschine 2, bei welcher der Behälter 5 nicht gekippt ist, auch bedarfsweise ohne Verriegelungsmechanismus 56 verschließbar und/oder verwendbar. Dies ist während des Ausbringvorgangs des Verteilguts, beispielsweise für kurze Überprüfungen des Füllstands, zum Nachfüllen und/oder zum Durchmischen des vorgehaltenen Verteilguts besonders vorteilhaft.

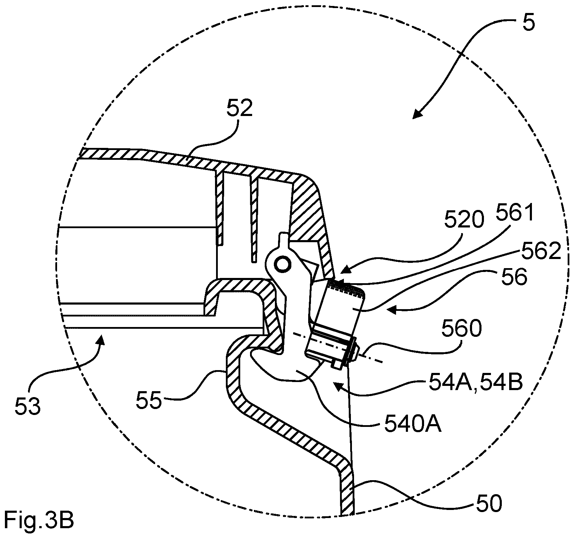

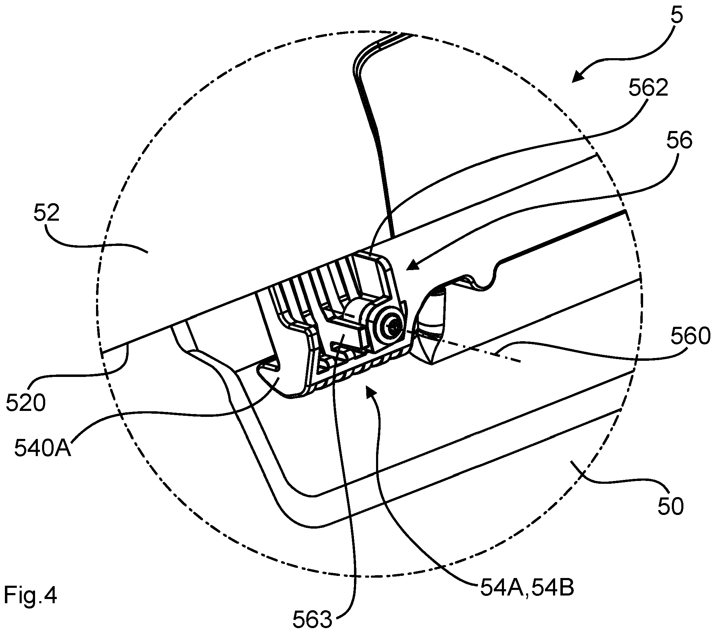

Ist hingegen ein Kippen des Behälters 5, beispielsweise für eine Transportstellung der Arbeitsmaschine 2, beabsichtigt und/oder sind schwierige Betriebsbedingungen, beispielsweise starke Vibrationen, während des Betriebs zu erwarten, ist Behälter 5, insbesondere der Deckel 52, zusätzlich über den Verriegelungsmechanismus 56 zu verschließen bzw. zu verriegeln. Der Verriegelungsmechanismus 56 ist hierfür in verklemmbarer und/oder blockierender Weise zwischen dem Schnellverschluss 54A, 54B und dem Deckel 56 positionierbar, wie in der Fig.3B und Fig.4 gezeigt ist. Insbesondere ist ein dem Verriegelungsmechanismus 56 zugeordneter Stell- und/oder Schwenkhebel 562 zu erkennen, welcher für die Schließstellung des Verriegelungsmechanismus 56 in aufgerichteter Weise positionierbar ist. Wie ebenfalls zu erkennen ist, ist der Verriegelungsmechanismus 56, insbesondere der Stell- und/oder Schwenkhebel 562, in der den Deckel 52 und/oder Schnellverschluss 54A, 54B verriegelnden Position von unten gegen einen Außenrand 520 des Deckels 52 angelegt und/oder angedrückt. Der Verriegelungsmechanismus 56 ist dabei zwischen dem Deckel 52, insbesondere dem Außenrand 520 des Deckels, und dem Schnellverschluss 54A, 54B, insbesondere dem Schnapphaken 540A, eingeklemmt, so dass der Schnellverschluss 54A, 54B in oder während der Schließstellung des Verriegelungsmechanismus 56 zumindest nahezu unbeweglich am Behälter 5 und/oder Deckel 52 fixiert ist. Mit anderen Worten ist der Verriegelungsmechanismus 56 in Schließstellung dazu eingerichtet, den Schnellverschluss 54A, 54B und den Deckel 52 gegeneinander zu verspannen und/oder zu blockieren.

In einer in der Fig.3B angedeuteten alternativen Ausführungsform ist zwischen dem Verriegelungsmechanismus 56, insbesondere dem Stell- und/oder Schwenkhebel 562, und dem Deckel 52, insbesondere dem Außenrand 520, ein Spalt 561, beispielsweise zum Ausgleich von Fertigungstoleranzen, vorgesehen. Die Größe des Spalts 561 ist dabei derart ausgebildet, dass der Schnellverschluss 54A, 54B in Schließstellung minimal beweglich bleibt, jedoch den Verstellbereich α derart begrenzt, dass der Schnellverschluss 54A, 54B und damit ein Öffnen des Deckels 52 blockiert ist.

Wie in der Fig.4 besonders gut zu erkennen ist, ist des Weiteren ein dem Verriegelungsmechanismus 56 zugeordnetes Federelement 563 vorgesehen, welches dazu eingerichtet ist, den Verriegelungsmechanismus 56, insbesondere den Stell- und/oder Schwenkhebel 562, in vorgespannter Weise in wenigstens einer der mehreren Stellungen, insbesondere in der Schließ- und/oder Öffnungsstellung, zu fixieren und/oder zu arretieren. Das Federelement 563 ist in dem gezeigten Ausführungsbeispiel nach Art einer zumindest teilweise nachgiebig ausgebildeten Blattfeder oder dergl. ausgebildet und/oder einteilig am Schnellverschluss 54A, 54B angeformt. In einer zu gezeigten alternativen Ausführungsform wäre hier auch ein Federelement 563 denkbar, welches nach Art einer Spiralfeder oder dergl. ausgebildet ist.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind. Die Erfindung wird allein durch den Schutzbereich der Patentansprüche definiert.

### Bezugszeichenliste

- 1: Ackerschlepper
- 2: Landwirtschaftliche Arbeitsmaschine
- 3: Balken
- 4: Säaggregat
- 5: Behälter
- 6: Bodenbearbeitungswerkzeug
- 50: Vorratstank
- 51: Auslauf
- 52: Abdeckmittel, Deckel
- 53: Öffnung
- 54A, 54B: Schnellverschluss
- 540A: Schnapphaken
- 540B: Vorsprung
- 55: Seitenwand
- 56: Verriegelungsmechanismus
- 561: Spalt
- 562: Stell- und/oder Schwenkhebel
- 563: Federelement
- 560: Drehachse

- F: Fahrtrichtung

- α: Verstellbereich

## Patentansprüche

1. Behälter (5) für eine landwirtschaftliche Arbeitsmaschine (2), insbesondere zum Vorhalten von landwirtschaftlichem Verteilgut, mit wenigstens einem am Behälter (5) angeordneten oder anbringbaren Abdeckmittel (52), insbesondere Deckel, welches(r) mittels zumindest eines, vorzugsweise nach Art einer Schnappverbindung ausgebildeten, Schnellverschlusses (54A, 54B) selbsthaltend verschließbar ist, **gekennzeichnet, durch** wenigstens einen Verriegelungsmechanismus (56), welcher zumindest teilweise dreh- und/oder verschiebbar zwischen dem Schnellverschluss (54A, 54B) und dem Abdeckmittel (52), insbesondere Deckel, angeordnet ist, und welcher zum Verriegeln des Abdeckmittels (52), insbesondere Deckels, in verklemmbarer und/oder blockierender Weise zwischen dem Schnellverschluss (54A, 54B) und dem Abdeckmittel (52), insbesondere Deckel, positionierbar ist.

2. Behälter (5) nach Anspruch 1, **dadurch gekennzeichnet, dass** der Verriegelungsmechanismus (56) dreh- und/oder verschiebbar, insbesondere schwenkbar, am Schnellverschluss (54A, 54B) angeordnet ist.

3. Behälter (5) nach zumindest einem der vorgenannten Ansprüche, **dadurch gekennzeichnet, dass** der Schnellverschluss (54A, 54B) verstellbar, insbesondere schwenkbar, am Behälter (5), vorzugsweise am Abdeckmittel (52) bzw. Deckel, angeordnet ist, und besonders bevorzugt zumindest teilweise nach Art eines Handgriffs ausgebildet ist.

4. Behälter (5) nach zumindest einem der vorgenannten Ansprüche, **dadurch gekennzeichnet, dass** der Schnellverschluss (54A, 54B) in oder während einer Schließstellung des Verriegelungsmechanismus (56) zumindest nahezu unbeweglich, vorzugsweise am Behälter (5) und/oder Abdeckmittel (52), insbesondere Deckel, fixiert und/oder blockiert ist.

5. Behälter (5) nach Anspruch 3 und 4, **dadurch gekennzeichnet, dass** der Schnellverschluss (54A, 54B), insbesondere zum Öffnen und/oder Verschließen des Abdeckmittels bzw. Deckels, einen definierten Verstellbereich α aufweist, welcher mittels des Verriegelungsmechanismus (56) begrenzbar ist.

6. Behälter (5) nach zumindest einem der vorgenannten Ansprüche, **dadurch gekennzeichnet, dass** der Verriegelungsmechanismus (56) zum Verriegeln des Abdeckmittels (52), insbesondere Deckels, und/oder des Schnellverschlusses (54A, 54B) unmittelbar unterhalb und/oder gegen eine Kontur des Abdeckmittels (52), insbesondere des Deckels, vorzugsweise gegen und/oder an einen Außenrand des Abdeckmittels (52), insbesondere des Deckels, positionierbar ist.

7. Behälter (5) nach zumindest einem der vorgenannten Ansprüche, **dadurch gekennzeichnet, dass** der Verriegelungsmechanismus (56), insbesondere ein dem Verriegelungsmechanismus (56) zugeordneter Stellhebel (562), in vorgespannter Weise in wenigstens einer von mehreren Stellungen, insbesondere in einer Schließ- und/oder Öffnungsstellung des Verriegelungsmechanismus (56), fixierbar und/oder arretierbar ist.

8. Landwirtschaftliche Arbeitsmaschine (2), insbesondere Sämaschine, zum Ausbringen von granularem Verteilgut auf eine landwirtschaftliche Nutzfläche, mit wenigstens einem zum Vorhalten des Verteilguts vorgesehenen Behälter (5), **dadurch gekennzeichnet, dass** der wenigstens eine Behälter (5) nach zumindest einem der vorgenannten Ansprüche ausgebildet ist.

9. Landwirtschaftliche Arbeitsmaschine (2) nach Anspruch 8, wobei die Arbeitsmaschine (2) mehrere nach Art von Reiheneinheiten ausgebildete Säaggregate (4) zum Ablegen des Verteilguts umfasst, welche jeweils wenigstens einen Behälter (5) zum Vorhalten des Verteilguts umfassen, **dadurch gekennzeichnet, dass** die Behälter (5) nach zumindest einem der vorgenannten Ansprüche 1 bis 7 ausgebildet sind.

## Claims

1. Container (5) for an agricultural work machine (2), in particular for holding agricultural distribution material, having at least one covering means (52), in particular a lid, which is arranged or can be attached to the container (5) and can be closed in a self-retaining manner by means of at least one quick-release fastener (54A, 54B), preferably designed in the manner of a snap connection, **characterized by** at least one locking mechanism (56) which is arranged at least partially rotatably and/or displaceably between the quick-release fastener (54A, 54B) and the covering means (52), in particular the lid, and which can be positioned between the quick-release fastener (54A, 54B) and the covering means (52), in particular the lid, in a clampable and/or blocking manner in order to lock the covering means (52), in particular the lid.

2. Container (5) according to claim 1, **characterized in that** the locking mechanism (56) is arranged rotatably and/or displaceably, in particular pivotably, on the quick-release fastener (54A, 54B).

3. Container (5) according to at least one of the preceding claims, **characterized in that** the quick-release fastener (54A, 54B) is arranged adjustably, in particular pivotably, on the container (5), preferably on the covering means (52) or lid, and is particularly preferably at least partially designed in the manner of a handle.

4. Container (5) according to at least one of the preceding claims, **characterized in that** the quick-release fastener (54A, 54B) is fixed and/or blocked at least almost immovably, preferably on the container (5) and/or covering means (52), in particular the lid, in or during a closed position of the locking mechanism (56).

5. Container (5) according to claim 3 and 4, **characterized in that** the quick-release fastener (54A, 54B), in particular for opening and/or closing the covering means or lid, has a defined adjustment range α which can be limited by means of the locking mechanism (56) .

6. Container (5) according to at least one of the preceding claims,
**characterized in that** the locking mechanism (56) for locking the covering means (52), in particular the lid, and/or the quick-release fastener (54A, 54B) can be positioned directly below and/or against a contour of the covering means (52), in particular the lid, preferably against and/or on at an outer edge of the covering means (52), in particular the lid.

7. Container (5) according to at least one of the preceding claims,
**characterized in that** the locking mechanism (56), in particular an adjusting lever (562) associated with the locking mechanism (56), can be fixed and/or locked in a pre-loaded manner in at least one of a plurality of positions, in particular in a closed and/or open position of the locking mechanism (56).

8. Agricultural work machine (2), in particular a seed drill, for spreading granular distribution material on an agricultural area, comprising at least one container (5) provided for holding the distribution material, **characterized in that** the at least one container (5) is designed according to at least one of the preceding claims.

9. Agricultural work machine (2) according to claim 8, wherein the work machine (2) comprises a plurality of sowing units (4) designed in the manner of row units for depositing the distribution material, each of which units comprises at least one container (5) for holding the distribution material, **characterized in that** the containers (5) are designed according to at least one of the preceding claims 1 to 7.

## Revendications

1. Récipient (5) pour une machine de travail agricole (2), en particulier pour le stockage de produits agricoles à distribuer, comportant au moins un moyen de recouvrement (52), en particulier un couvercle, disposé ou pouvant être appliqué sur le récipient (5), lequel moyen ou couvercle peut être fermé de manière autobloquante à l'aide d'au moins une fermeture rapide (54A, 54B), réalisée de préférence à la manière d'un assemblage par encliquetage, **caractérisé par** au moins un mécanisme de verrouillage (56) qui est disposé au moins partiellement de manière rotative et/ou coulissante entre la fermeture rapide (54A, 54B) et le moyen de recouvrement (52), en particulier le couvercle, et qui peut être positionné entre la fermeture rapide (54A, 54B) et le moyen de recouvrement (52), en particulier le couvercle, de manière à pouvoir être coincé et/ou bloqué pour le verrouillage du moyen de recouvrement (52), en particulier le couvercle.

2. Récipient (5) selon la revendication 1, **caractérisé en ce que** le mécanisme de verrouillage (56) est disposé de manière rotative et/ou coulissante, en particulier de manière pivotante, sur la fermeture rapide (54A, 54B).

3. Récipient (5) selon au moins l'une des revendications précédentes,
**caractérisé en ce que** la fermeture rapide (54A, 54B) est disposée de manière réglable, en particulier pivotante, sur le récipient (5), de préférence sur le moyen de recouvrement (52) ou le couvercle, et est de manière particulièrement préférée réalisée au moins partiellement à la manière d'une poignée.

4. Récipient (5) selon au moins l'une des revendications précédentes,
**caractérisé en ce que** la fermeture rapide (54A, 54B) est au moins pratiquement immobile, de préférence fixée et/ou bloquée sur le récipient (5) et/ou le moyen de recouvrement (52), en particulier le couvercle, dans ou pendant une position de fermeture du mécanisme de verrouillage (56).

5. Récipient (5) selon les revendications 3 et 4, **caractérisé en ce que** la fermeture rapide (54A, 54B), en particulier pour l'ouverture et/ou la fermeture du moyen de recouvrement ou du couvercle, présente une plage de réglage définie α qui peut être limitée à l'aide du mécanisme de verrouillage (56).

6. Récipient (5) selon au moins l'une des revendications précédentes,
**caractérisé en ce que** le mécanisme de verrouillage (56) pour le verrouillage du moyen de recouvrement (52), en particulier du couvercle, et/ou la fermeture rapide (54A, 54B) peut être positionné(e) directement en dessous et/ou contre un contour du moyen de recouvrement (52), en particulier du couvercle, de préférence contre et/ou sur un bord extérieur du moyen de recouvrement (52), en particulier du couvercle.

7. Récipient (5) selon au moins l'une des revendications précédentes,
**caractérisé en ce que** le mécanisme de verrouillage (56), en particulier un levier de réglage (562) associé au mécanisme de verrouillage (56), peut être fixé et/ou arrêté de manière précontrainte dans au moins une position parmi plusieurs positions, en particulier dans une position de fermeture et/ou d'ouverture du mécanisme de verrouillage (56).

8. Machine de travail agricole (2), en particulier semoir, pour l'épandage de produit à distribuer granulaire sur une surface agricole utile, comportant au moins un récipient (5) prévu pour le stockage du produit à distribuer,
**caractérisée en ce que** l'au moins un récipient (5) est réalisé selon au moins l'une des revendications précitées.

9. Machine de travail agricole (2) selon la revendication 8, dans laquelle la machine de travail (2) comprend plusieurs éléments semeurs (4) conçus à la manière d'unités en ligne pour le dépôt du produit à distribuer, qui comprennent chacun au moins un récipient (5) pour contenir le produit à distribuer,
**caractérisée en ce que** les récipients (5) sont réalisés selon au moins l'une des revendications 1 à 7 précitées.
